(19) Europäisches Patentamt
European Patent Office
Office européen des brevets

(11) **EP 4 764 590 A1**

(12) **DEMANDE DE BREVET EUROPEEN**

(43) Date de publication:
**24.06.2026 Bulletin 2026/26**

(21) Numéro de dépôt: **25226516.0**

(22) Date de dépôt: **22.12.2025**

(51) Classification Internationale des Brevets (IPC):
**G01S 7/02** (2006.01)

(52) Classification Coopérative des Brevets (CPC):
**G01S 7/021**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.12.2024 FR 2415081**

(71) Demandeur: **THALES**
**92190 Meudon (FR)**

(72) Inventeurs:
• **REILLE, Guillaume**
  **78851 ELANCOURT CEDEX (FR)**
• **ENDERLI, Cyrille**
  **78851 ELANCOURT CEDEX (FR)**
• **DEFOUR, Martin**
  **78851 ELANCOURT CEDEX (FR)**

(74) Mandataire: **Lavoix**
**2, place d'Estienne d'Orves**
**75441 Paris Cedex 09 (FR)**

(54) **PROCÉDÉ DE RECONNAISSANCE OU D'IDENTIFICATION D'UN ÉMETTEUR RADAR, DISPOSITIF ET PRODUIT-PROGRAMME D'ORDINATEUR ASSOCIÉS**

(57) La présente invention concerne un procédé de reconnaissance ou d'identification d'un émetteur radar, comprenant les étapes suivantes :
- réception d'un signal radar par un récepteur (12),
- segmentation du signal reçu en temps et en fréquence,
- démodulation du signal segmenté,
- extraction d'un front de montée du signal démodulé,
- calcul des parties réelle et imaginaire du front de montée en fonction du temps,
- définition d'un chemin associé au signal,
- mise à l'échelle du chemin, de sorte que le chemin mis à l'échelle soit invariant à une phase initiale du signal reçu, et
- comparaison du chemin associé au signal mis à l'échelle avec au moins un chemin de référence indépendamment des vitesses de parcours desdits chemins.

L'invention concerne en outre un dispositif et un produit-programme d'ordinateur associés.

FIG.1

**EP 4 764 590 A1**

**Description**

La présente invention concerne un procédé de reconnaissance ou d'identification d'un émetteur radar, et un dispositif associé.

Les formes d'onde sont de plus en plus définies par logiciel.

Une telle caractéristique offre la possibilité, pour un même radar, de changer aisément de formes d'onde, voire de les paramétrer en temps réel. Cela permet notamment de s'adapter aux conditions d'environnement et/ou de rendre la caractérisation et le pistage plus difficile pour un système d'écoute non souhaité.

Cela rend également caduque les procédés d'identification basés sur la comparaison de la forme d'onde, par exemple les canaux de fréquence ou les périodicités temporelles des impulsions radar, par rapport à une bibliothèque obtenue préalablement par des observations précédentes.

De plus, les émetteurs radar sont susceptibles d'avoir plusieurs modes de fonctionnement. L'utilisation restreinte de certains modes de fonctionnement permet de rendre ce mode de fonctionnement peu ou pas référencé dans les bibliothèques, de sorte à éviter toute reconnaissance ultérieure.

Le but de l'invention est alors de proposer un procédé de reconnaissance ou d'identification d'un émetteur radar non sensible au changement de formes d'onde.

A cet effet, l'invention a pour objet un procédé de reconnaissance ou d'identification d'un émetteur radar, comprenant les étapes suivantes :

- réception d'un signal radar par un récepteur,
- segmentation du signal reçu en temps et en fréquence,
- démodulation du signal segmenté,
- extraction d'un front de montée du signal démodulé,
- calcul des parties réelle et imaginaire du front de montée en fonction du temps,
- définition d'un chemin associé au signal, le chemin étant une courbe dans un plan cartésien, dans lequel la partie réelle du front de montée est représentée en abscisses et la partie imaginaire du front de montée est représentée en ordonnées,
- mise à l'échelle du chemin, de sorte que le chemin mis à l'échelle soit invariant à une phase initiale du signal reçu, et
- comparaison du chemin associé au signal mis à l'échelle avec au moins un chemin de référence indépendamment des vitesses de parcours desdits chemins.

Le signal est ici associé au parcours d'un chemin dans le plan complexe, ce chemin étant caractérisé de sorte à être invariant par re-paramétrisation, c'est-à-dire que la caractérisation de la courbe est identique quelle que soit la vitesse de parcours du chemin. Or, le changement de la forme d'onde correspond justement à une re-paramétrisation, et non à un changement du chemin. Le procédé permet donc de reconnaître ou d'identifier un émetteur radar, quand bien même la forme d'onde a été reparamétrée.

Suivant d'autres aspects avantageux de l'invention, le procédé comprend une ou plusieurs des caractéristiques suivantes, prises isolément ou suivant toutes les combinaisons techniquement possibles :

- l'au moins un chemin de référence comprend des chemins associés à des signaux reçus précédemment, et dans lequel, si lors de l'étape de comparaison, le chemin associé au signal est similaire à au moins un des chemins associés à des signaux reçus précédemment, alors le procédé comprend une étape de classification du signal reçu avec l'au moins un signal reçu précédemment dont le chemin associé est similaire ;
- l'au moins un chemin de référence est associé à un émetteur radar connu, et, dans lequel, si lors de l'étape de comparaison, le chemin associé au signal est similaire à au moins un chemin de référence, alors le procédé comprend une étape d'identification de l'émetteur du signal reçu, l'émetteur étant l'émetteur radar connu du chemin de référence similaire ;
- le procédé comprend une étape de filtrage et sous-échantillonnage du signal segmenté à une fréquence de filtre en amont de l'étape de démodulation ;
- l'étape de mise à l'échelle du chemin comprend la mise à l'échelle du chemin de sorte que le chemin se termine en un point donné du plan cartésien ;
- le signal démodulé présente un plateau de puissance, le front de montée comprenant les segments du signal reçu démodulé présentant une puissance comprise entre une valeur minimale et une valeur maximale de puissance, la valeur minimale de puissance étant comprise entre 10% et 30% du plateau de puissance, la valeur maximale de puissance étant comprise entre 80% et 95% du plateau de puissance ;
- le procédé comprend une étape de définition d'une signature du chemin mis à l'échelle, la courbe correspondant à une fonction continue dans le plan cartésien, la signature comprenant la suite de coefficients obtenus par intégrations de Riemann-Stieltjes itérées sur les coordonnées des points de la fonction, l'étape de comparaison du chemin associé au signal comprenant une étape de comparaison de la signature dudit chemin ou d'un paramètre lié à la signature avec la signature ou le paramètre lié de chaque chemin de référence ; et/ou

- l'étape de comparaison du chemin associé au signal comprend une étape de déformation temporelle dynamique pour mesurer la similarité entre les chemins.

L'invention concerne également un dispositif de reconnaissance ou d'identification d'un émetteur radar, comprenant un récepteur radar, un module de segmentation, un module de démodulation, un module d'extraction, un module de calcul des parties réelles et imaginaires, un module de définition d'un chemin, un module de mise à l'échelle, et un module de comparaison, le dispositif étant apte à mettre en œuvre le procédé tel que défini précédemment.

Suivant d'autres aspects avantageux de l'invention, le dispositif comprend la caractéristique suivante : le récepteur radar comprend un récepteur superhétérodyne.

L'invention concerne également un produit-programme d'ordinateur comportant des instructions logicielles qui, lorsqu'elles sont exécutées par un ordinateur, mettent en œuvre les étapes de segmentation, démodulation, extraction d'un front de montée, calcul des parties réelle et imaginaire, définition d'un chemin associé, mise à l'échelle du chemin, et comparaison du procédé tel que défini précédemment.

L'invention apparaîtra plus clairement à la lecture de la description qui va suivre, donnée uniquement à titre d'exemple non limitatif, et faite en référence aux dessins dans lesquels :

[Fig. 1] la figure 1 est une représentation schématique d'un dispositif de reconnaissance ou d'identification d'un émetteur radar selon un mode de réalisation de l'invention,

[Fig 2] la figure 2 est une représentation schématique d'un procédé de reconnaissance ou d'identification d'un émetteur radar selon un mode de réalisation de l'invention,

[Fig 3] la figure 3 est un exemple de courbes en puissance et en phase associées à un émetteur ayant une commande d'amplitude x, et

[Fig 4] la figure 4 est un exemple de chemins mis à l'échelle selon le procédé de l'invention.

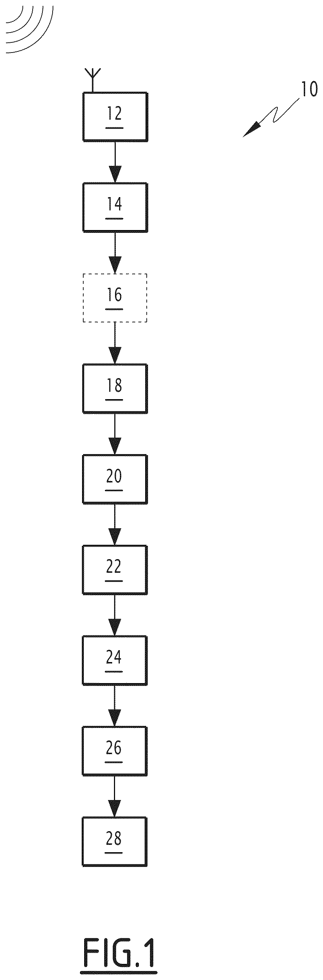

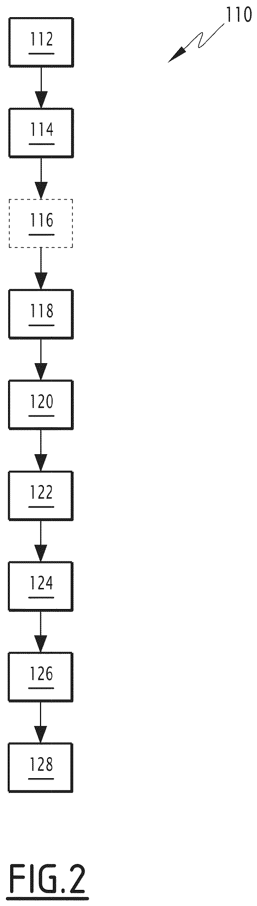

L'invention concerne un procédé 110 et un dispositif 10 de reconnaissance ou d'identification d'un émetteur radar, dont un mode de réalisation sera décrit en regard des figures 1 et 2.

Le procédé 110 de reconnaissance ou d'identification d'un émetteur radar comprend les étapes suivantes :

- réception 112 d'un signal radar r par un récepteur,
- segmentation 114 du signal reçu en temps et en fréquence,
- optionnellement, filtrage et sous-échantillonnage 116 du signal segmenté,
- démodulation 118 du signal segmenté,
- extraction 120 d'un front de montée du signal démodulé,
- calcul 122 des parties réelle et imaginaire du front de montée en fonction du temps,
- définition 124 d'un chemin associé au signal, le chemin étant une courbe dans un plan cartésien, dans lequel la partie réelle du front de montée est représentée en abscisses et la partie imaginaire du front de montée est représentée en ordonnées,
- mise à l'échelle 126 du chemin permettant une invariance du chemin à une phase initiale du signal reçu, et
- comparaison 128 du chemin associé au signal mis à l'échelle avec au moins un chemin de référence indépendamment des vitesses de parcours desdits chemins.

Un émetteur radar émet un signal émis.

Le signal émis s présente une représentation complexe suivante :

$$s(t) = \sqrt{y(x(t))} \times e^{i\varphi(x(t))}$$

avec x la commande d'amplification de l'émetteur, t la variable temporelle, y(x) la puissance, et $\varphi(x)$ le déphasage du signal produit en sortie de l'amplification de l'émetteur radar.

La variable temporelle t varie ici entre 0 et une durée de front, par exemple égale à 100 ns.

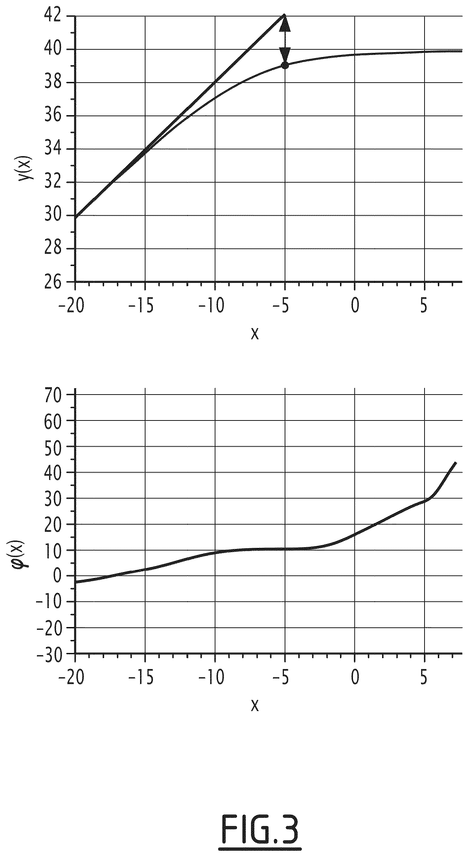

Un exemple de courbes en puissance et en phase associées à un émetteur en fonction de la commande d'amplitude x est donné à titre d'exemple sur la figure 3.

En observant la puissance en sortie d'un émetteur par rapport à la commande d'amplification, on observe des modulations involontaires d'amplitude, qui sont propres au composant utilisé pour l'amplification du signal à émettre, et donc de l'émetteur, et en phase.

Chaque émetteur radar présente un point de compression, correspondant au point où la commande d'amplification s'arrête à une puissance crête d'entrée telle que la puissance de sortie est réduite d'un facteur donné par rapport au régime linéaire.

Le récepteur reçoit alors un signal r correspondant au signal émis atténué d'un facteur de propagation $\alpha$ et à une phase initiale $\varphi_0$ près et auquel est ajouté un bruit de mesure w(t), le bruit de mesure étant par exemple un bruit additif Gaussien.

Le signal reçu r s'écrit alors ainsi :

$$r(t) = \alpha e^{i\varphi_0} s(t) + w(t).$$

Le récepteur comprend ici une antenne, l'antenne étant apte à recevoir un signal dans une bande de réception.

Le signal reçu est, alors, par exemple, filtré, amplifié et transposé en fréquence avec un mélangeur, de manière connue.

Le filtrage, l'amplification, et la transposition sont, par exemple, mis en œuvre par une unité de réception superhétérodyne comprise dans le récepteur.

Le filtrage permet notamment de réduire le bruit de mesure w(t).

Le signal reçu est ici numérisé dans une sous-bande du spectre de fréquence, par exemple d'une largeur comprise entre 500 MHz et 1 GHz, par exemple par un numériseur.

La sous-bande est comprise dans la bande de réception.

Le numériseur échantillonne ici les voies en phase et en quadrature avec une fréquence d'échantillonnage supérieure à la bande de réception.

Puis, le signal est segmenté en temps et en fréquence.

Le signal est, par exemple, isolé en temps et en fréquence.

Cela permet d'isoler le signal associé à une seule impulsion dans l'ensemble du signal reçu, qui comprend, par exemple, généralement plusieurs impulsions.

La segmentation est, par exemple, réalisée de manière classique.

Le signal est, par exemple, envoyé à une unité de traitement des données.

Lorsqu'une impulsion radar est détectée, c'est-à-dire qu'un début de signal radar est détecté, ici par l'unité de traitement de données, alors son temps d'arrivée et sa fréquence porteuse sont mesurés.

La fréquence porteuse est, par exemple, estimée. Ladite estimation est, par exemple, obtenue par une recherche du maximum de puissance dans une transformée de Fourier rapide.

A partir du temps d'arrivée et de la fréquence porteuse, est extrait une partie du signal, appelée par la suite signal, autour de son temps d'arrivée : le signal est alors isolé en temps.

En outre, le signal est, par exemple, isolé en fréquence, par exemple grâce à une étape de filtrage, grâce à l'information de fréquence porteuse.

Dans un mode de réalisation particulier, le procédé comprend ensuite une étape de filtrage et sous-échantillonnage 116 du signal segmenté à une fréquence de filtre en amont de l'étape de démodulation.

Ladite étape est, par exemple, optionnelle selon la cadence de numérisation du récepteur, en particulier, par exemple, lorsque la cadence de numérisation a déjà un effet filtrant.

Cette étape permet notamment d'améliorer le rapport signal sur bruit en réduisant la cadence d'échantillonnage, par exemple à une valeur de l'ordre de quelques dizaines de MHz ou une centaine de MHz.

Puis, le procédé comprend l'étape de démodulation du signal 118.

L'étape de démodulation 118 comprend, par exemple, une sous-étape de transposition du signal dans une bande de base pour l'échantillonner par double démodulation en quadrature ou via le signal analytique.

Un résidu de porteuse est défini, comme égal à la différence entre la fréquence porteuse et la fréquence de démodulation.

La fréquence de démodulation est, par exemple, ici la fréquence centrale de la sous-bande dans laquelle est numérisé le signal reçu, tel que décrit précédemment.

Dans un mode de réalisation particulier, le procédé comprend en outre une étape d'affinage de l'estimation du résidu de porteuse. Cette étape d'affinage comprend, par exemple, une sous-étape d'affinage de l'estimation de la fréquence porteuse, en complément de la valeur mesurée décrite précédemment, par exemple à l'aide de la transformée de Fourier des échantillons de signal extraits.

Puis, le front de montée du signal démodulé est extrait.

Ici, le signal démodulé présente un plateau de puissance, le front de montée comprenant les segments du signal reçu démodulé présentant une puissance comprise entre une valeur minimale et une valeur maximale de puissance, la valeur minimale de puissance étant comprise entre 10% et 30% du plateau de puissance, la valeur maximale de puissance étant comprise entre 80% et 95% du plateau de puissance.

Plus particulièrement, lesdits segments sont ici extraits du signal démodulé pour former le front de montée.

Ici, le résidu de porteuse est, par exemple, démodulé numériquement, de sorte à extraire le front de montée dans la bande de base.

Les parties réelle et imaginaire du front de montée en fonction du temps sont calculées, c'est-à-dire les coordonnées cartésiennes du signal correspondant au front de montée.

Puis, il est défini le chemin associé au signal.

Le chemin correspond à la courbe dans un plan cartésien, dans lequel la partie réelle du front de montée est représentée en abscisses et la partie imaginaire du front de montée est représentée en ordonnées.

La courbe correspond ici à une fonction X(t) continue dans le plan cartésien, paramétrée par la variable temporelle t, par exemple avec $t \in [0\,;1]$.

Le procédé comprend la mise à l'échelle du chemin permettant une invariance du chemin à une phase initiale du signal reçu, et en outre une invariance du chemin au facteur de propagation $\alpha$.

L'étape de mise à l'échelle du chemin 126 comprend, par exemple, la mise à l'échelle du chemin de sorte que le chemin se termine en un point donné du plan cartésien.

Le chemin commence au point (0 ; 0).

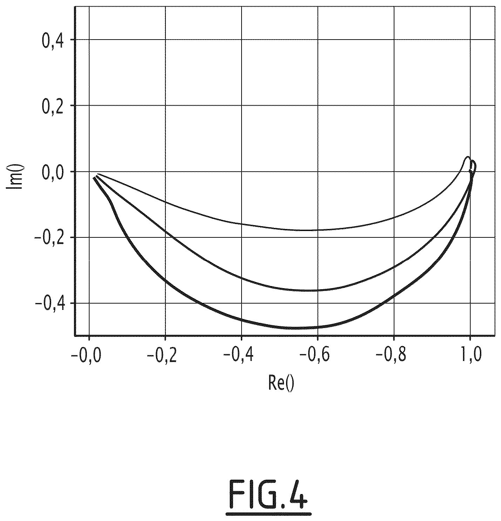

Des exemples de différents chemins mis à l'échelle sont, par exemple, donnés à titre d'exemple sur la figure 4.

Dans cet exemple, l'ensemble des chemins a été mis à l'échelle de sorte à finir au point (1 ;0).

L'étape de mise à l'échelle 126 est susceptible d'être réalisée directement sur le chemin, c'est-à-dire sur la courbe.

Additionnellement ou alternativement, la mise à l'échelle est réalisée directement sur le front de montée ou sur les parties réelle et imaginaire.

Par exemple, tous les échantillons de signal sont divisés par la dernière valeur du front de montée dudit signal.

Alternativement, le chemin est caractérisé par des signatures invariantes par rotation, de sorte que sa caractérisation est invariante par rapport à la phase initiale.

Ladite caractérisation comprend, par exemple, une division complexe ou un traitement F invariant par rotation, tel que

$$F(z) = F(ze^{i\theta}) \text{ pour toute angle } \Theta,$$

de l'ensemble des chemins.

L'étape de mise à l'échelle 126 est, par exemple, réalisée en amont ou en aval de l'étape de définition 124.

Le chemin associé au signal mis à l'échelle est alors comparé avec au moins un chemin de référence indépendamment des vitesses de parcours desdits chemins.

Dans un mode de réalisation particulier, le procédé comprend une étape de définition d'une signature du chemin mis à l'échelle.

La signature comprend, par exemple, la suite de coefficients obtenus par intégrations de Riemann-Stieltjes itérées sur les coordonnées des points de la fonction X.

Avec les deux coordonnées des points de la courbe sont notées $X^{(1)}(t) : [0,1] \to \mathbb{R}$ et $X^{(2)}(t) : [0,1] \to \mathbb{R}$, les coefficients d'ordre $k \geq 1$ de la signature sont donnés par :

$$\mathcal{S}_{i_1,\dots,i_k} = \int_{0 < s_1 < \cdots < s_k < 1} \mathrm{d}X^{(i_1)}(s_1) \dots \mathrm{d}X^{(i_k)}(s_k) \quad , \quad (i_1,\dots,i_k) \in \{1,2\}^k$$

Les coefficients d'ordre k sont ainsi au nombre de $2^k$.

L'ordre k est, par exemple, choisi en fonction de la précision recherchée et/ou de la puissance de calcul à disposition.

Ici, l'ordre k est, par exemple, compris entre 2 et 8.

La signature d'un chemin a la propriété d'être invariante par re-paramétrisation, c'est-à-dire que les coefficients obtenus sont identiques quelle que soit la vitesse de parcours du chemin - autrement dit, les courbes $\boldsymbol{X}(t)$ et $\boldsymbol{X}(\psi(t))$ engendrent les mêmes coefficients $\mathcal{S}_{i_1,\dots,i_k}$ si $\psi : [0,1] \to [0,1]$ est continue, et que $\psi(1) - 1 = \psi(0) = 0$ .

Dans un mode de réalisation particulier, un paramètre lié à la signature est, par exemple, considérée.

Le paramètre comprend, par exemple, la log-signature, correspondant au logarithme formel de la signature dans l'algèbre des séries entières en un nombre donné, ici deux, indéterminées.

La signature et la log-signature d'un chemin sont, par exemple, en partie documentées dans l'article *A primer on*

*the signature method in machine learning,* I. Chevyrev, A. Kormilitzin, en ligne : DOI:10.48550/arXiv.1603.03788.

L'étape de comparaison 128 du chemin associé au signal comprend alors une étape de comparaison de la signature dudit chemin ou d'un paramètre lié à la signature, ici par exemple la log-signature, avec la signature ou le paramètre lié de chaque chemin de référence.

Alternativement, l'étape de comparaison 128 du chemin associé au signal comprend une étape de déformation temporelle dynamique pour mesurer la similarité entre les chemins, par exemple telle que décrite dans l'article Alignment of curves by dynamic time warping, K. Wang, T. Gasser, The annals of statistics 25(3) pp.1251-1276. 1997

L'étape de déformation temporelle dynamique comprend une re-paramétrisation des chemins dans un référentiel temporel commun.

Le chemin mis à l'échelle est alors comparé avec au moins un chemin de référence indépendamment des vitesses de parcours desdits chemins.

La comparaison est, par exemple, réalisée à l'aide d'intelligence artificielle, par exemple par un réseau de neurones artificiels, en particulier entraîné sur des chemins de référence.

Le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de « Convolutional Neural Networks ».

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « kernel » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « fully connected », et parfois désigné sous la dénomination « couche dense ».

Dans un mode de réalisation, l'au moins un chemin de référence comprend des chemins associés à des signaux reçus précédemment.

Si lors de l'étape de comparaison 128, le chemin associé au signal est similaire à au moins un des chemins associés à des signaux reçus précédemment, alors le procédé comprend une étape de classification du signal reçu avec l'au moins un signal reçu précédemment dont le chemin associé est similaire.

Le procédé comprend alors, par exemple, une étape de reconnaissance de l'émetteur ayant émis le signal reçu, c'est-à-dire que les impulsions provenant dudit émetteur sont classifiées ensemble.

Le procédé selon l'invention permet de réaliser une telle reconnaissance indépendamment de la forme d'onde employée par l'émetteur.

Additionnellement ou alternativement, l'au moins un chemin de référence est associé à un émetteur radar connu.

Si lors de l'étape de comparaison 128, le chemin associé au signal est similaire à au moins un chemin de référence, alors le procédé comprend une étape d'identification de l'émetteur du signal reçu, l'émetteur étant l'émetteur radar connu du chemin de référence similaire.

Dans un mode de réalisation particulier, l'au moins un chemin de référence comprend une pluralité de chemins de référence, chaque chemin de référence étant associé à un émetteur radar connu parmi une liste d'émetteurs connus.

L'au moins un chemin de référence comprend au moins un chemin associé pour chaque émetteur connu de la liste.

L'étape de comparaison 128 comprend alors la comparaison du chemin associé au signal mis à l'échelle avec l'au moins un chemin de référence, de sorte à déterminer l'émetteur connu de la liste ayant le plus probablement émis le signal reçu.

Le procédé comprend alors une étape de détermination de l'émetteur ayant le plus probablement émis le signal reçu, correspondant à l'émetteur connu de la liste ayant le plus probablement émis le signal reçu.

La comparaison permet ainsi de voir les similitudes entre le chemin du signal reçu et des chemins de référence, pour regrouper les chemins similaires et/ou pour reconnaître un probable émetteur du signal reçu, sans que cette comparaison soit sensible au changement de formes d'onde.

L'invention concerne en outre un dispositif électronique de reconnaissance ou d'identification d'un émetteur radar, apte à mettre en œuvre le procédé de reconnaissance ou d'identification tel que décrit précédemment.

Le dispositif électronique 10 comprend un module de réception ou récepteur 12, un module de segmentation 14, un module de démodulation 18, un module d'extraction 20, un module de calcul 22 des parties réelles et imaginaires, un module de définition 24 d'un chemin, un module de mise à l'échelle 26, et un module de comparaison 28, comme représenté sur la figure 1.

En complément facultatif, le dispositif électronique 10 comprend un module de filtrage et sous-échantillonnage 16.

Le dispositif électronique 10 comprend une unité de traitement d'informations formée par exemple d'une mémoire et d'un processeur associé à la mémoire.

Dans l'exemple de la figure 1, le module de réception 12, le module de segmentation 14, le module de démodulation 18, le module d'extraction 20, le module de calcul 22 des parties réelles et imaginaires, le module de définition 24 d'un chemin, le module de mise à l'échelle 26, et le module de comparaison 28, ainsi qu'en complément facultatif le module de filtrage et sous-échantillonnage 16, sont réalisés chacun sous forme d'un logiciel, ou d'une brique logicielle, exécutable par le processeur. La mémoire du dispositif électronique 10 est alors apte à stocker un logiciel de réception, un logiciel de segmentation, un logiciel de démodulation, un logiciel d'extraction, un logiciel de calcul des parties réelles et imaginaires, un logiciel de définition d'un chemin, un logiciel de mise à l'échelle, et un logiciel de comparaison, ainsi qu'en complément facultatif un logiciel de de filtrage et sous-échantillonnage. Le processeur est alors apte à exécuter chacun des logiciels ci-dessus.

En variante non représentée, le module de réception 12, le module de segmentation 14, le module de démodulation 18, le module d'extraction 20, le module de calcul 22 des parties réelles et imaginaires, le module de définition 24 d'un chemin, le module de mise à l'échelle 26, et le module de comparaison 28, ainsi qu'en complément facultatif le module de filtrage et sous-échantillonnage 16, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit).*

Lorsque le dispositif électronique 10 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

L'invention concerne en outre un produit- programme d'ordinateur comportant des instructions logicielles qui, lorsqu'elles sont exécutées par un ordinateur, mettent en œuvre les étapes du procédé tel que décrit précédemment, en dehors de l'étape de réception.

## Revendications

1. Procédé de reconnaissance ou d'identification d'un émetteur radar, comprenant les étapes suivantes :

- réception (112) d'un signal radar par un récepteur (12),
- segmentation (114) du signal reçu en temps et en fréquence,
- démodulation (118) du signal segmenté,
- extraction (120) d'un front de montée du signal démodulé,
- calcul (122) des parties réelle et imaginaire du front de montée en fonction du temps,
- définition (124) d'un chemin associé au signal, le chemin étant une courbe dans un plan cartésien, dans lequel la partie réelle du front de montée est représentée en abscisses et la partie imaginaire du front de montée est représentée en ordonnées,
- mise à l'échelle (126) du chemin, de sorte que le chemin mis à l'échelle soit invariant à une phase initiale du signal reçu, et
- comparaison (128) du chemin associé au signal mis à l'échelle avec au moins un chemin de référence indépendamment des vitesses de parcours desdits chemins.

2. Procédé selon la revendication 1, dans lequel l'au moins un chemin de référence comprend des chemins associés à des signaux reçus précédemment, et dans lequel, si lors de l'étape de comparaison (128), le chemin associé au signal est similaire à au moins un des chemins associés à des signaux reçus précédemment, alors le procédé comprend une étape de classification du signal reçu avec l'au moins un signal reçu précédemment dont le chemin associé est similaire.

3. Procédé selon la revendication 1 ou 2, dans lequel l'au moins un chemin de référence est associé à un émetteur radar connu, et, dans lequel, si lors de l'étape de comparaison (128), le chemin associé au signal est similaire à au moins un chemin de référence, alors le procédé comprend une étape d'identification de l'émetteur du signal reçu, l'émetteur étant l'émetteur radar connu du chemin de référence similaire.

4. Procédé selon l'une quelconque des revendication 1 à 3, comprenant une étape de filtrage et sous-échantillonnage (116) du signal segmenté à une fréquence de filtre en amont de l'étape de démodulation.

5. Procédé selon l'une quelconque des revendications 1 à 4, dans lequel l'étape de mise à l'échelle (126) du chemin comprend la mise à l'échelle du chemin de sorte que le chemin se termine en un point donné du plan cartésien.

6. Procédé selon l'une quelconque des revendications 1 à 5, dans lequel le signal démodulé présente un plateau de puissance, le front de montée comprenant les segments du signal reçu démodulé présentant une puissance comprise entre une valeur minimale et une valeur maximale de puissance, la valeur minimale de puissance étant comprise entre 10% et 30% du plateau de puissance, la valeur maximale de puissance étant comprise entre 80% et 95% du plateau de puissance.

7. Procédé selon l'une quelconque des revendications 1 à 6, comprenant une étape de définition d'une signature du chemin mis à l'échelle, la courbe correspondant à une fonction continue dans le plan cartésien, la signature comprenant la suite de coefficients obtenus par intégrations de Riemann-Stieltjes itérées sur les coordonnées des points de la fonction, l'étape de comparaison du chemin associé au signal comprenant une étape de comparaison de la signature dudit chemin ou d'un paramètre lié à la signature avec la signature ou le paramètre lié de chaque chemin de référence.

8. Procédé selon l'une quelconque des revendications 1 à 7, dans lequel l'étape de comparaison (128) du chemin associé au signal comprend une étape de déformation temporelle dynamique pour mesurer la similarité entre les chemins.

9. Dispositif (10) de reconnaissance ou d'identification d'un émetteur radar, comprenant un récepteur radar (12), un module de segmentation (14), un module de démodulation (18), un module d'extraction (20), un module de calcul (22) des parties réelles et imaginaires, un module de définition (24) d'un chemin, un module de mise à l'échelle (26), et un module de comparaison (28), le dispositif (10) étant apte à mettre en œuvre le procédé selon l'une quelconque des revendications 1 à 8.

10. Dispositif selon la revendication 9, dans lequel le récepteur radar (12) comprend un récepteur superhétérodyne.

11. Produit-programme d'ordinateur comportant des instructions logicielles qui, lorsqu'elles sont exécutées par un ordinateur, mettent en œuvre les étapes de segmentation (114), démodulation (118), extraction (120) d'un front de montée, calcul (122) des parties réelle et imaginaire, définition (124) d'un chemin associé, mise à l'échelle (126) du chemin, et comparaison (128) du procédé selon l'une quelconque des revendications 1 à 8.

FIG.1

FIG.2

## FIG.3

FIG.4

Europäisches
Patentamt

European
Patent Office

Office européen
des brevets

## RAPPORT DE RECHERCHE EUROPEENNE

**Numéro de la demande**

EP 25 22 6516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2024/319336 A1 (DO VAN LONG [VN] ET AL) 26 septembre 2024 (2024-09-26) * alinéas [0011] - [0031], [0046] - [0110] * * figures 1-13 * ----- | 1-11 | INV. G01S7/02 |
| A | EP 2 017 642 A2 (THALES SA [FR]) 21 janvier 2009 (2009-01-21) * alinéas [0001] - [0014], [0016] - [0031] * * figures 1-13 * ----- | 1-11 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 13 avril 2026 | Kruck, Peter |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**EP 4 764 590 A1**

## ANNEXE AU RAPPORT DE RECHERCHE EUROPEENNE
## RELATIF A LA DEMANDE DE BREVET EUROPEEN NO.

EP 25 22 6516

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-04-2026

| Document brevet cité au rapport de recherche | Date de publication | Membre(s) de la famille de brevet(s) | Date de publication |
|---|---|---|---|
| US 2024319336 A1 | 26-09-2024 | AUCUN | |
| EP 2017642 A2 | 21-01-2009 | AT E513228 T1 | 15-07-2011 |
| | | EP 2017642 A2 | 21-01-2009 |
| | | ES 2366264 T3 | 18-10-2011 |
| | | FR 2919130 A1 | 23-01-2009 |

EPO FORM P0460

Pour tout renseignement concernant cette annexe : voir Journal Officiel de l'Office européen des brevets, No.12/82

# EP 4 764 590 A1

## RÉFÉRENCES CITÉES DANS LA DESCRIPTION

**Littérature non-brevet citée dans la description**

- **K. WANG** ; **T. GASSER**. Alignment of curves by dynamic time warping. *The annals of statistics*, 1997, vol. 25 (3), 1251-1276